# EUROPÄISCHE PATENTSCHRIFT

(11) **EP 2 873 140 B1**
(45) Veröffentlichungstag und Bekanntmachung des Hinweises auf die Patenterteilung: **08.08.2018**
(21) Anmeldenummer: 13731033.0
(22) Anmeldetag: 17.06.2013
(51) Int. Cl.: H02K 7/10, H02K 5/04, B65G 13/07, H02K 7/14

(54) **ANLAGE MIT FÖRDEREINHEIT UND MOTOREINHEIT**
SYSTEM WITH CONVEYING UNIT AND MOTOR UNIT
DISPOSITIF COMPORTANT UNE UNITÉ DE TRANSPORT ET UNE UNITÉ MOTEUR

(30) Priorität: 09.07.2012 DE 102012013467
(43) Veröffentlichungstag der Anmeldung: 20.05.2015
(73) Patentinhaber: Sew-Eurodrive GmbH & Co. KG, 76646 Bruchsal (DE)
(72) Erfinder: SCHUMACHER, Meinhard, 74889 Sinsheim (DE)
(86) Internationale Anmeldenummer: PCT/EP2013/001785
(87) Internationale Veröffentlichungsnummer: WO 2014/008972

(56) Entgegenhaltungen:
- EP-A1- 1 935 755
- DE-C- 838 016
- JP-U- H01 132 847

## Beschreibung

Die Erfindung betrifft eine Anlage mit Fördereinheit und Motoreinheit.

**Aus der** JP H01 132847 **ist als nächstliegender Stand der Technik eine motorgetriebene Riemenfördereinheit bekannt. Somit ist** in einer Anlage zum Fördern von Objekten ein Getriebemotor verwendbar, der eine Riemenscheibe antreibt, auf welcher ein Riemen aufgeschoben ist.

Der Erfindung liegt daher die Aufgabe zugrunde, die Wartungskosten für eine Anlage mit Fördereinheit zu verringern.

Erfindungsgemäß wird die Aufgabe bei der Anlage nach den in Anspruch 1 angegebenen Merkmalen gelöst.

Wichtige Merkmale der Erfindung bei der Anlage sind, dass sie mit einer Fördereinheit und Motoreinheit ausgeführt ist, wobei die Fördereinheit eine Riemenscheibe aufweist, die zumindest teilweise von einem Abdeckgehäuse radial und/oder gehäusebildend, insbesondere schützend, umgeben ist,
wobei die Motoreinheit ein Abdeckgehäuse und einen Motor aufweist, dessen Gehäuse mit dem Abdeckgehäuse verbunden, insbesondere fest verbunden, ist,
wobei die Motoreinheit lösbar verbunden ist mit der Fördereinheit.

Von Vorteil ist dabei, dass die Motoreinheit von der Fördereinheit einfach trennbar und somit austauschbar ist. Insbesondere die Verbindung des Abdeckgehäuses mit der Motoreinheit ermöglicht ein gemeinschaftliches Abziehen der Motoreinheit, so dass nach Abziehen der Motoreinheit der Riemen frei zugänglich ist und dann ebenfalls abmontierbar und austauschbar ist. Somit ist ein besonders einfaches Austauschen und eine besonders einfache Montage sowie Wartung ermöglicht.

Bei einer vorteilhaften Ausgestaltung ist die Motoreinheit mit der Fördereinheit steckverbunden und/oder verriegelt. Von Vorteil ist dabei, dass eine einfache und schnell betätigbare Verbindung verwendet ist. Das Abdeckgehäuse muss also nur mit seinen Zapfen in Ausnehmungen der Fördereinheit, insbesondere der Befestigungsplatte, insbesondere am Rollenförderer, eingesteckt werden und ist schon betriebsbereit. Dabei ist zusätzlich zur Erhöhung der Sicherheit eine Verriegelung betätigbar.

Bei einer vorteilhaften Ausgestaltung ist das Abdeckgehäuse mehrteilig ausgeführt. Von Vorteil ist dabei, dass zwischen den Teilen des Abdeckgehäuses die Riemen herausführbar sind, insbesondere in die Umgebung der Fördereinheit.

Bei einer vorteilhaften Ausgestaltung ist zur Verbindung der Motoreinheit mit der Fördereinheit das Abdeckgehäuse mit einer Befestigungsplatte der Fördereinheit, lösbar verbunden, insbesondere steckverbunden und/oder verriegelt. Von Vorteil ist dabei, dass eine einfache kostengünstige Verbindungstechnik anwendbar ist und die Gewichtskraft der Motoreinheit über das Abdeckgehäuse ableitbar ist.

Bei einer vorteilhaften Ausgestaltung ist mit der Befestigungsplatte ein Bolzen verbunden, insbesondere einstückig oder zweiteilig,
wobei auf dem Bolzen ein Lager angeordnet ist, welches die Riemenscheibe aufnimmt. Von Vorteil ist dabei, dass die Lagerung der Riemenscheibe in einfacher Weise ermöglicht ist.

Bei einer vorteilhaften Ausgestaltung umschlingen ein oder mehrere Riemen die Riemenscheibe zumindest teilweise. Von Vorteil ist dabei, dass durch die Riemenscheibe mehrere Riemen antreibbar sind.

Bei einer vorteilhaften Ausgestaltung ist der Motor ein Umrichtermotor, insbesondere wobei ein Umrichter steckverbindbar ist mit dem Motor, welcher von dem Umrichter gespeist wird. Von Vorteil ist dabei, dass eine schnell betätigbare und einfach ausführbare Verbindung zwischen Motor und Umrichter ausführbar ist. Außerdem ist der Motor drehzahlgeregelt betreibbar, wobei der Umrichter integriert am Motor ist.

Bei einer vorteilhaften Ausgestaltung umfasst der Motor ein Getriebe, wobei das Getriebe von einem Elektromotor angetrieben ist. Von Vorteil ist dabei, dass ein hohes Drehmoment erzeugbar ist.

Bei einer vorteilhaften Ausgestaltung ist das Abdeckgehäuse mit einem Gehäuseteil des Motors verbunden, insbesondere fest verbunden. Von Vorteil ist dabei, dass das Abdeckgehäuse zusammen mit der Motoreinheit abziehbar ist von der Fördereinheit und somit durch das Abziehen der Motoreinheit die Riemenscheibe mit Riemen zugänglich machbar sind.

Bei einer vorteilhaften Ausgestaltung ist das Gehäuseteil des Motors ein Lagerschild des Motors. Von Vorteil ist dabei, dass die Wärme des Motors zumindest teilweise ans Lagerschild abgeführt wird, das aber mit dem Abdeckgehäuse verbunden ist. Somit dient das Andeckgehäuse dem Aufspreizen der Wärme und verbessert somit die Entwärmung des Motors.

Bei einer vorteilhaften Ausgestaltung ist das Lager auf dem Bolzen in einer axialer Richtung mittels eines auf dem Bolzen angeordneten Sicherungsrings gesichert und in der anderen axialen Richtung mittels eines am Bolzen ausgeformten Absatzes. Von Vorteil ist dabei, dass das Lager und/oder die Riemenscheibe in einfacher Weise axial sicherbar sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

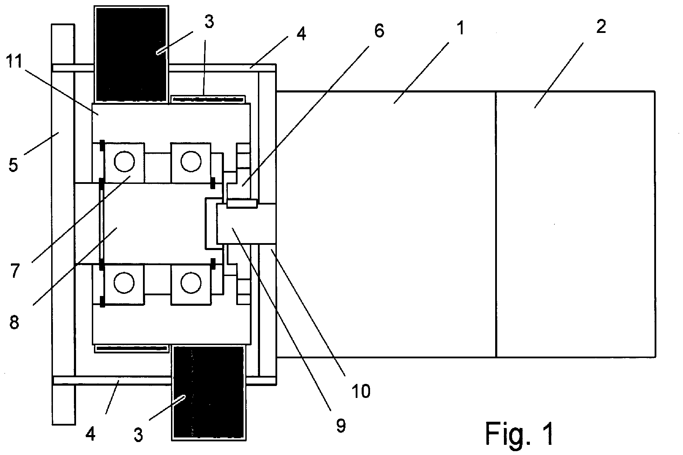

In der Figur 1 ist ein schematischer Querschnitt durch den erfindungsgemäßen Riemenantrieb gezeigt.

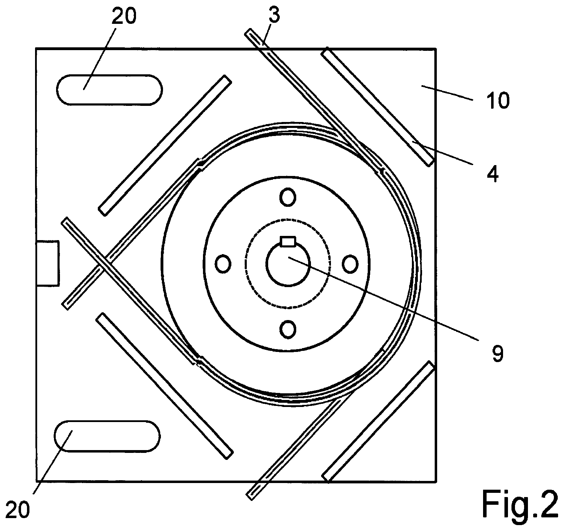

In der Figur 2 ist eine zugehörige Draufsicht gezeigt.

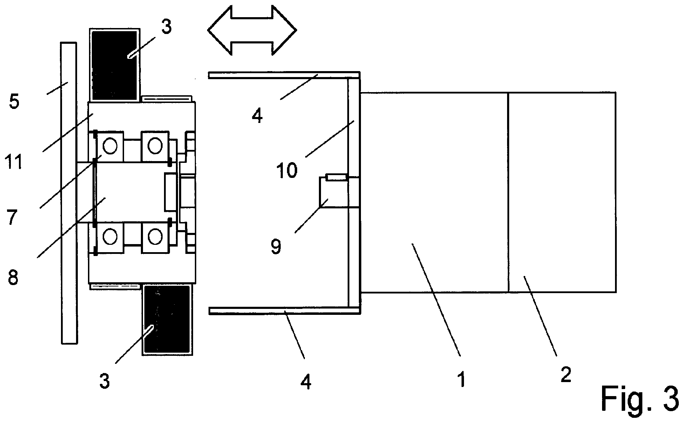

In der Figur 3 ist der Riemenantrieb beim Aufstecken beziehungsweise Abziehen des Motors gezeigt.

Wie in den Figuren gezeigt, weist der erfindungsgemäße Riemenantrieb einen Motor 1, insbesondere Elektromotor, auf, der von einem Umrichter 2 speisbar ist. Der Elektromotor 1 ist mit dem Umrichter 2 als Umrichtermotor ausgeführt. Der Riemenantrieb ist somit von einem Getriebemotor antreibbar.

Der Gehäuse des Elektromotors, insbesondere sein abtriebsseitiger Lagerflansch, ist abtriebsseitig mit einem Gehäuseflanschteil 10 verbunden oder einstückig mit diesem ausgeführt. Am Gehäuseflanschteil 10 ist das Abdeckgehäuse 4 befestigt. Das Abdeckgehäuse 4 ist mehrteilig ausgeführt.

Der Motor 1 samt Gehäuseflanschteil 10 mit Abdeckgehäuse 4 ist als Motoreinheit aufsteckbar auf eine Fördereinheit.

Die Fördereinheit weist eine Befestigungsplatte 5 auf, mit der das Abdeckgehäuse 4 beim Aufstecken verbindbar ist. An der Befestigungsplatte 5 ist ein Bolzen 8 angeordnet, auf dem ein Lager 7, insbesondere ein Kugellager, angeordnet ist. Dabei ist der Innenring des Lagers 7 mit dem Bolzen drehfest verbunden und der Außenring des Lagers 7 ist drehfest mit der Riemenscheibe 11 verbunden, welche von den Riemen 3 zumindest teilweise umschlungen ist. Die Riemenscheibe 11 ist mit einer Kupplung verbunden, deren Kupplungsteil 6 mit der Rotorwelle 9 beim Aufstecken der Motoreinheit auf die Antriebseinheit drehfest verbindbar ist, insbesondere mittels einer formschlüssigen Verbindung, insbesondere Passfederverbindung.

Die Befestigungsplatte 5 weist Ausnehmungen 20 für ein Verrieglungsmittel auf, so dass nach dem Aufstecken der Motoreinheit ein Verriegeln der Motoreinheit mit der Fördereinheit ausführbar ist.

Die Fördereinheit ist als Rollenfördermittel ausführbar.

Die Verbindung zwischen Abdeckgehäuse 4 und Befestigungsplatte 5 ist vorzugsweise kraftschlüssig und/oder formschlüssig ausgeführt. Insbesondere bei kraftschlüssiger Verbindung ist die zusätzliche Verriegelung zur Erhöhung der Sicherheit der Verbindung vorteilhaft.

Das Abdeckgehäuse 4 ist mehrteilig aufgebaut und fungiert auch als Einzugsschutz und Quetschschutz. Dabei sind die Teile des Abdeckgehäuses 4 plattenartige Teile, insbesondere Kunststoffteile oder Stahlblechteile, welche mit dem Gehäuseflanschteil 10 verbunden sind. Es ist auch eine Ausführung des Abdeckgehäuses 4 als Kunststoffdruckgussteil sinnvoll, insbesondere wobei dann vorteiligerweise dieses Abdeckgehäuse mit dem metallischen Gehäuseflanschteil 10 als Verbundteil ausgeführt ist.

Bei Montage oder Wartungsarbeiten verbleibt nach Abziehen der Motoreinheit die Fördereinheit samt Riemenscheibe 11, Riemen 3, Lagerung 7 und Bolzen 8 sowie Befestigungsplatte 5 am Rollenförderer. Die Riemen 3 sind als Endlosriemen, also Umschlingungsriemen, ausgeführt und verbleiben somit am Rollenförderer.

Das Abdeckgehäuse 4 dient zum Anbau der Motoreinheit. Insbesondere trägt es auch das Gewicht der Motoreinheit. Es ist also keine weitere Abstützung der Motoreinheit notwendig. Das Abdeckgehäuse 4 leitet also das Reaktionsmoment des Motors und zumindest einen wesentlichen Teil der Gewichtskraft des Motors durch an die Befestigungsplatte 5, insbesondere die wiederum am Rollenförderer und/oder weiteren Anlagenteil befestigt ist.

Die Befestigungsplatte 5 ist an der restlichen Rollenfördereranlage fest verbunden.

Wichtig ist bei der Erfindung, dass beim Abziehen der Motoreinheit gleichzeitig das Abdeckgehäuse 4 abgezogen wird, da es an der Motoreinheit fest verbunden ist.

Somit ist mittels Abziehen der Motoreinheit der Riemen 3 zugänglich und einfach austauschbar.

Da die Motoreinheit mit der Fördereinheit nur steckverbunden und gegebenenfalls zusätzlich verriegelt ist, ist ein einfaches Verbinden oder Trennen der Motoreinheit von der Fördereinheit ermöglicht, wobei kein weiteres Zusatzwerkzeug notwendig ist.

Die einzelnen Teile des Abdeckgehäuses 4 sind in Umfangsrichtung voneinander beabstandet, wobei durch den jeweiligen Beabstandungsbereich ein Riemen 3 durchgeführt ist.

Beim Steckverbinden wird auch die drehfeste Verbindung, insbesondere Passfederverbindung, zwischen Rotorwelle 9 und Kupplungsteil 6 betätigt. Somit wird einerseits der stationäre Teil, umfassend Motorgehäuse des Motors 1 mit Abdeckgehäuse 4 und Befestigungsplatte 5, steckverbunden und andererseits der drehbare Teil, umfassend Kupplungsteil 6 und Rotorwelle 9.

Auch bei weiteren erfindungsgemäßen Ausführungsbeispielen ist der Motor über das Abdeckgehäuse an der Befestigungsplatte 5 gehalten. Die Fördereinheit ist separat an der befestigungsplatte vorgesehen. Dies ermöglicht ein einfaches und schnelles Steckverbinden des Abdeckgehäuses 4 mit der Befestigungsplatte 5. Statt der Steckverbindung ist aber auch ein Bajonettverschließen oder andere formschlüssige Verbindungen zwischen Abdeckgehäuse und Befestigungsplatte 5 realisierbar.

Bei weiteren erfindungsgemäßen Ausführungsbeispielen weist die Motoreinheit selbst wiederum eine elektrische und mechanische Steckverbindung zwischen dem Umrichter, welche den Motor speist, und dem Motor auf, so dass ein einfacher Austausch des Umrichters ermöglicht ist. Bei einem alternativen Ausführungsbeispiel ist der Umrichter integriert im Motor angeordnet.

### Bezugszeichenliste

1 Motor, insbesondere Getriebemotor, umfassend ein von einem Elektromotor angetriebenes Getriebe
2 Umrichter zur Speisung des Elektromotors
3 Antriebsriemen
4 Abdeckgehäuse
5 Befestigungsplatte am Rollenförderer
6 Kupplungsteil
7 Lager
8 Bolzen
9 Rotorwelle des Motors
10 Gehäuseflanschteil
11 Riemenscheibe
20 Ausnehmungen für Verriegelungsmittel

## Patentansprüche

1. Anlage mit Fördereinheit und Motoreinheit,
**wobei** die Fördereinheit eine Riemenscheibe (11) **und einen Riemen** aufweist, die zumindest teilweise von einem Abdeckgehäuse (4) radial und/oder gehäusebildend, insbesondere schützend, umgeben ist,
wobei die Motoreinheit ein Abdeckgehäuse (4) und einen Motor (1) aufweist, dessen Gehäuse mit dem Abdeckgehäuse (4) verbunden, insbesondere fest verbunden, ist,
wobei die Motoreinheit lösbar verbunden ist mit der Fördereinheit,
**dadurch gekennzeichnet, dass**
**die lösbare Verbindung des Abdeckgehäuses (4) mit der Motoreinheit ein gemeinschaftliches Abziehen der Motoreinheit ermöglicht, so dass nach Abziehen der Motoreinheit der Riemen der Fördereinheit frei zugänglich ist.**

2. Anlage nach Anspruch 1,
**dadurch gekennzeichnet, dass**
die Motoreinheit mit der Fördereinheit steckverbunden ist und/oder verriegelt ist und/oder mittels Bajonettverschluss verbunden ist,
insbesondere wobei das Abdeckgehäuse (4) steckverbunden und/oder verriegelt verbunden ist mit einer Befestigungsplatte (5) der Fördereinheit.

3. Anlage nach mindestens einem der vorangegangenen Ansprüche,
**dadurch gekennzeichnet, dass**
der Motor (1) über das Abdeckgehäuse (4) gehalten ist.

4. Anlage nach mindestens einem der vorangegangenen Ansprüche,
**dadurch gekennzeichnet, dass**
das Abdeckgehäuse (4) mehrteilig ausgeführt ist.

5. Anlage nach mindestens einem der vorangegangenen Ansprüche,
**dadurch gekennzeichnet, dass**
zur Verbindung der Motoreinheit mit der Fördereinheit das Abdeckgehäuse (4) mit einer Befestigungsplatte (5) der Fördereinheit, lösbar verbunden ist, insbesondere steckverbunden und/oder verriegelt ist.

6. Anlage nach mindestens einem der vorangegangenen Ansprüche,
**dadurch gekennzeichnet, dass**
mit der Befestigungsplatte (5) ein Bolzen (8) verbunden ist, insbesondere einstückig oder zweiteilig,
wobei auf dem Bolzen (8) ein Lager (7) angeordnet ist, welches die Riemenscheibe (11) aufnimmt.

7. Anlage nach mindestens einem der vorangegangenen Ansprüche,
**dadurch gekennzeichnet, dass**
ein oder mehrere Riemen die Riemenscheibe (11) zumindest teilweise umschlingen.

8. Anlage nach mindestens einem der vorangegangenen Ansprüche,
**dadurch gekennzeichnet, dass**
der Motor (1) ein Umrichtermotor ist, insbesondere wobei ein Umrichter (2) steckverbindbar ist mit dem Motor (1), welcher von dem Umrichter (2) gespeist wird.

9. Anlage nach mindestens einem der vorangegangenen Ansprüche,
**dadurch gekennzeichnet, dass**
der Motor (1) ein Getriebe umfasst, wobei das Getriebe von einem Elektromotor angetrieben ist.

10. Anlage nach mindestens einem der vorangegangenen Ansprüche,
**dadurch gekennzeichnet, dass**
das Abdeckgehäuse (4) mit einem Gehäuseteil des Motors (1) verbunden, insbesondere fest verbunden ist.

11. Anlage nach mindestens einem der vorangegangenen Ansprüche,
**dadurch gekennzeichnet, dass**
Gehäuseteil des Motors (1) ein Lagerschild aufweist.

12. Anlage nach mindestens einem der vorangegangenen Ansprüche,
**dadurch gekennzeichnet, dass**
das Lager (7) auf dem Bolzen (8) in einer axialer Richtung mittels eines auf dem Bolzen (8) angeordneten Sicherungsrings gesichert ist und in der anderen axialen Richtung mittels eines am Bolzen (8) ausgeformten Absatzes.

## Claims

1. An installation with a conveying unit and motor unit,
wherein the conveying unit has a pulley (11), which is surrounded radially and/or in housing-forming manner, in particular in protective manner, at least partially by a covering housing (4), and a belt,
wherein the motor unit has a covering housing (4) and a motor (1), the housing of which is connected, in particular securely connected, to the covering housing (4),
wherein the motor unit is detachably connected to the conveying unit,
**characterised in that**
the detachable connection of the covering housing (4) to the motor unit permits common removal of the motor unit, so that once the motor unit has been removed the belt of the conveying unit is freely accessible.

2. An installation according to Claim 1,
**characterised in that**
the motor unit is plug-connected to, and/or is locked with, and/or is connected by means of a bayonet lock to, the conveying unit,
in particular wherein the covering housing (4) is plug-connected and/or connected in locked manner to a fastening plate (5) of the conveying unit.

3. An installation according to at least one of the preceding claims,
**characterised in that**
the motor (1) is held by means of the covering housing (4).

4. An installation according to at least one of the preceding claims,
**characterised in that**
the covering housing (4) is formed in several parts.

5. An installation according to at least one of the preceding claims,
**characterised in that**
for connecting the motor unit to the conveying unit the covering housing (4) is detachably connected, in particular is plug-connected and/or locked, to a fastening plate (5) of the conveying unit.

6. An installation according to at least one of the preceding claims,
**characterised in that**
a bolt (8) is connected, in particular in one piece or in two parts, to the fastening plate (5),
wherein a bearing (7) which receives the pulley (11) is arranged on the bolt (8).

7. An installation according to at least one of the preceding claims,
**characterised in that**
one or more belts at least partially wrap around the pulley (11).

8. An installation according to at least one of the preceding claims,
**characterised in that**
the motor (1) is a converter motor, in particular wherein a converter (2) can be plug-connected to the motor (1), which is fed by the converter (2).

9. An installation according to at least one of the preceding claims,
**characterised in that**
the motor (1) comprises a gear mechanism, the gear mechanism being driven by an electric motor.

10. An installation according to at least one of the preceding claims,
**characterised in that**
the covering housing (4) is connected, in particular is connected in fixed manner, to a housing part of the motor (1).

11. An installation according to at least one of the preceding claims,
**characterised in that**
[the] housing part of the motor (1) has a bearing shell.

12. An installation according to at least one of the preceding claims,
**characterised in that**
the bearing (7) is secured on the bolt (8) in an axial direction by means of a securing ring arranged on the bolt (8) and in the other axial direction by means of a step formed on the bolt (8).

## Revendications

1. Installation dotée d'une unité de convoyage et d'une unité de motorisation, l'unité de convoyage comportant une courroie et une poulie (11) entourée, au moins en partie, par une coiffe (4) dans le sens radial et/ou avec formation d'un boîtier, notamment avec effet protecteur,
l'unité de motorisation présentant une coiffe (4) et un moteur (1) dont le carter est relié à ladite coiffe (4), en particulier de façon rigide,
ladite unité de motorisation étant reliée de manière libérable à ladite unité de convoyage, **caractérisée par le fait que**
la liaison libérable de la coiffe (4) avec l'unité de motorisation rend possible une extraction conjointe de ladite unité de motorisation, de telle sorte que la courroie de l'unité de convoyage soit librement accessible après extraction de ladite unité de motorisation.

2. Installation selon la revendication 1,
**caractérisée par le fait que**
l'unité de motorisation est reliée à l'unité de convoyage par emboîtement, et/ou est verrouillée et/ou reliée au moyen d'une fermeture à baïonnette,
sachant notamment que la coiffe (4) est reliée par emboîtement, et/ou est reliée par verrouillage à une platine (5) de fixation de ladite unité de convoyage.

3. Installation selon au moins l'une des revendications précédentes,
**caractérisée par le fait que**
le moteur (1) est retenu par l'intermédiaire de la coiffe (4).

4. Installation selon au moins l'une des revendications précédentes,
**caractérisée par le fait que**
la coiffe (4) est réalisée en plusieurs parties.

5. Installation selon au moins l'une des revendications précédentes,
**caractérisée par le fait que**,
en vue d'instaurer la liaison de l'unité de motorisation avec l'unité de convoyage, la coiffe (4) est reliée de manière libérable, notamment reliée par emboîtement et/ou verrouillée à une platine (5) de fixation de ladite unité de convoyage.

6. Installation selon au moins l'une des revendications précédentes,
**caractérisée par le fait**
**qu'**un axe (8) est relié à la platine de fixation (5), en particulier d'un seul tenant ou en deux parties,
sachant qu'un palier (7), implanté sur ledit axe (8), reçoit la poulie (11).

7. Installation selon au moins l'une des revendications précédentes,
**caractérisée par le fait**
**qu'**une ou plusieurs courroie(s) ceinture(nt) la poulie (11), au moins en partie.

8. Installation selon au moins l'une des revendications précédentes,
**caractérisée par le fait que**
le moteur (1) est un moteur à convertisseur, sachant notamment qu'un convertisseur (2) peut être connecté par enfichage audit moteur (1), lequel est alimenté par ledit convertisseur (2).

9. Installation selon au moins l'une des revendications précédentes,
**caractérisée par le fait que**
le moteur (1) inclut une transmission, ladite transmission étant entraînée par un moteur électrique.

10. Installation selon au moins l'une des revendications précédentes,
**caractérisée par le fait que**
la coiffe (4) est reliée, notamment reliée de façon rigide à une partie du carter du moteur (1).

11. Installation selon au moins l'une des revendications précédentes,
**caractérisée par le fait que**
la partie du carter du moteur (1) est un bouclier de palier.

12. Installation selon au moins l'une des revendications précédentes,
**caractérisée par le fait que**
le palier (7) est bloqué à demeure sur l'axe (8), dans une direction axiale au moyen d'une bague d'arrêt mise en place sur ledit axe (8) et, dans l'autre direction axiale, au moyen d'un décrochement ménagé sur ledit axe (8).
